# EUROPÄISCHE PATENTSCHRIFT

(11) **EP 0 658 521 B1**
(45) Veröffentlichungstag und Bekanntmachung des Hinweises auf die Patenterteilung: **16.07.1997**
(21) Anmeldenummer: 94116356.0
(22) Anmeldetag: 17.10.1994
(51) Int. Cl.: C03C 8/02

(54) **Blei- und cadmiumfreie Glasfrittenzusammensetzung**
Lead- and cadmium-free glass frits composition
Composition de frittes de verre exempte de plomb et cadmium

(30) Priorität: 25.11.1993 FR 9314127
(43) Veröffentlichungstag der Anmeldung: 21.06.1995
(73) Patentinhaber: CERDEC AKTIENGESELLSCHAFT KERAMISCHE FARBEN, D-60327 Frankfurt (DE)
(72) Erfinder: Anquetil, Jerome, F-87400 Saint-Leonard-de-Noblat (FR)

(56) Entgegenhaltungen:
- EP-A- 0 267 154
- EP-A- 0 294 502
- EP-A- 0 327 106
- EP-A- 0 347 379
- DE-A- 4 335 685
- US-A- 4 446 241
- US-A- 5 120 483
- DATABASE WPI Section Ch, Week 9233 Derwent Publications Ltd., London, GB; Class G02, AN 92-275200 & SU-A-1 678 788 (KHRUSTAL RES PRODN ASSOC) , 23.September 1991
- JOURNAL OF THE AMERICAN CERAMIC SOCIETY, Bd. 67, no.12, Dezember 1984 COLUMBUS US, Seiten 782-785, I.A. CHAKRABORTY ET AL 'Properties and Structure of Lanthanum Borate Glasses.'
- JOURNAL OF THE AMERICAN CERAMIC SOCIETY, Bd. 44, no.2, 1961 COLUMBUS US, Seiten 87-91, E.M. LEVIN ET AL 'Immiscibility and the System Lanthanum Oxide-Boric Oxide.'
- B. ELVERS ET AL 'ULLMANN'S ENCYCLOPEDIA OF INDUSTRIAL CHEMISTRY. Vol. A12' 1989 , VCH VERLAG. , WEINHEIM, DE * Seite 376 - Seite 377 *

## Beschreibung

Die Erfindung betrifft blei- und cadmiumfreie Glasfrittenzusammensetzung auf der Basis eines Boratglases und deren Verwendung. Erfindungswesentlicher Bestandteil der Zusammensetzung ist Lanthanoxid (La₂O₃), wohingegen Kieselsäure ( SiO₂) nicht oder nur in geringer Menge anwesend ist.

Zum Emaillieren und Dekorieren von Gegenständen aus Glas, Glaskeramik, Porzellan, Bone China und Keramik werden Glasfritten benötigt, welche in Abhängigkeit von dem für die Anwendung erforderlichen Eigenschaftsprofil unterschiedliche Zusammensetzungen aufweisen. Besonders variabel bezüglich der Eigenschaften, wie Wärmeausdehnungskoeffizient, Schmelzverhalten und chemische Beständigkeit, sind bleihaltige Glasfritten auf der Basis von Silikatgläsern.

Aus toxikologischen Gründen besteht zunehmend bedarf an Glasfritten, deren Zusammensetzungen weder Blei noch Cadmium enthält. Zwar sind schon verschiedene blei- und cadmiumfreie Glasfrittenzusammensetzung auf der Basis von Silikatgläsern bekannt geworden, etwa solche mit einem hohen Zinkoxidgehalt (siehe beispielsweise EP-B 0 267 154) oder einem hohen Wismutoxidgehalt (siehe beispielsweise EP-A 0 347 379) oder einem hohen Zirkon- und Lithiumgehalt (siehe beispielsweise EP-B 0 294 502), sie vermögen aber trotz verschiedener erwünschter Eigenschaften dem einen oder anderen Erfordernis nicht immer zu genügen.

Aus der EP-A 0 327 106 und der US 4,446,241 sind Glasfritten bekannt, welche Lanthanoxid und Boroxid enthalten; zwingender weiterer Bestandteil ist aber Kieselsäure in einer Menge von 8 bis 20 Gew.-% beziehungsweise 11 bis 40 Gew.-%.

Das SU-Patent 1 678 788 lehrt eine bleifreie Glasfritte für Dekorzwecke, die aus 2 bis 15 Gew.-% La 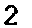 O 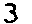 , 41 bis 50 Gew.-% B 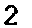 O 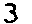 , je 1 bis 5 Gew.-% Na 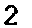 O und Li 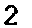 O und 30 bis 40 Gew.-% ZnO besteht.

Ein Lanthan-Boratglas, vorzugsweise ein solches der Formel La 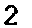 O 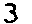 · 6 B 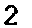 O 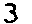 findet gemäß US 5,120,483 Verwendung zur Herstellung gesinterter Formkörper. Hinweise, bestimmte andere Metalloxide in das Glas einzubauen und derart veränderte Gläser für Dekorationszwecke zu verwenden, werden nicht gegeben.

Aus den vorgenannten Gründen besteht weiterhin ein großer Bedarf an neuen blei- und cadmiumfreien Glasfrittenzusammensetzungen, mit deren Hilfe dem Fachmann eine größere Auswahlmöglichkeit gegeben wird, eine für seinen Anwendungszweck optimale Glasfrittenzusammensetzung zu finden. Eine weitere Aufgabe der Erfindung richtet sich darauf, durch Verwendung nur weniger Einsatzstoffe jedoch verschiedenen Einsatzmengen, zu Glasfrittenzusammensetzungen zu gelangen, welche ein sehr unterschiedliches Eigenschaftsbild aufweisen.

Die Aufgabe wird durch eine blei- und cadmiumfreie Glasfrittenzusammensetzung auf der Basis eines Boratglases gelöst, welche dadurch gekennzeichnet ist, daß sie als netzwerkbildende Oxide 30 bis 80 Mol-% Boroxid, 4 bis 22 Mol-% Lanthanoxid und im wesentlichen keine Kieselsäure enthält, das Molverhältnis von Boroxid (B 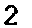 O 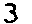 ) zu Lanthanoxid (La 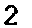 O 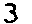 ) im Bereich von 3 zu 1 oder darüber liegt und daß sie ein oder mehrere Oxide aus der Reihe der Alkalimetalloxide, Erdalkalimetalloxide, Aluminiumoxid und Zinkoxid in einer Gesamtmenge von 4 bis 65 Mol-% enthält.

Zusammensetzungen, welche im wesentlichen frei von Li₂O sind, werden bevorzugt.

Die erfindungsgemäßen Boratgläser enthalten BO₃- und LaO₃-Gruppen als wesentliche netzwerkbildende Gruppen.

Die Viskosität von Boratgläsern ist vielfach niedriger als von Silikatgläsern (siehe Ullmann*'*s Encyclopedia of Industrial Chemistry, Vol. A 12, 5th ed. 1989, 376-377), und dies ist auch ein Vorteil der Glasfritten mit der erfindungsgemäßen Zusammensetzung.

Aus dem binären Phasendiagramm La₂O₃ - B₂O₃ folgt, daß Systeme mit einem La₂O₃-Gehalt zwischen 1 und etwa 25 Mol-% in der flüssigen Phase eine Mischungslücke aufweisen - siehe E.M. Levin et al. J. Amer. Ceram. Soc. 44 (2), 89 (1961). Dies bedeutet, daß solche Zusammensetzungen entmischte Gläser bilden. Überraschenderweise wurde nun gefunden, daß sich diese Entmischung vermeiden und eine reine Glasphase auch in dem Bereich der Mischungslücke, also bei einem Molverhältnis von B₂O₃ zu La₂O₃, zwischen 3 zu 1 und 99 zu 1, stabilisieren läßt, wenn die Zusammensetzung zusätzlich andere Oxide, darunter insbesondere Al₂O₃, enthält. Damit lassen sich völlig neue Glasfritten mit geringerem La₂O₃-Gehalt herstellen, als dies erwartet werden konnte, von Glasfritten mit einem Molverhältnis B₂O₃ zu La₂O₃ von größer 99 zu 1 abgesehen, welche sich aber kaum von reinem Boratglas unterscheiden.

Bevorzugte Glasfrittenzusammensetzungen enthalten 4 bis 22 Mol-% La₂O₃, 45 bis 75 Mol-% B₂O₃, 0 bis 25 Mol-% Al₂O₃, 0 bis 30 Mol-% ZnO, 0 bis 25 Mol-% Na₂O, 0 bis 10 Mol-% K₂O und 0 bis 10 Mol-% CaO und/oder BaO, wobei die Gesamtmenge an Al₂O₃, ZnO, Na₂O, K₂O, CaO und BaO 10 bis 50 Mol-% ausmacht und andere als die zuvor genannten Oxide in einer Menge bis insgesamt 10 Mol-% anwesend sein können. Die Zusammensetzung besonders bevorzugter Glasfritten besteht im wesentlichen aus
4 bis 22 Mol-% La₂O₃,
50 bis 70 Mol-% B₂O₃,
0 bis 20 Mol-% Al₂O₃,
0 bis 25 Mol-% ZnO,
0 bis 20 Mol-% Na₂O,
0 bis 1 Mol-% K₂O und
0 bis 1 Mol-% CaO und/oder BaO,
wobei die Summe aus Al₂O₃ und ZnO 10 bis 30 Mol-% und die Summe aus den genannten Alkali- und Erdalkalimetalloxiden 4 bis 20 Mol-% ausmacht.

Die Glasfrittenzusammensetzung gemäß Anspruch wird auf bekannte Weise hergestellt, das heißt durch Schmelzen einer Mischung von Ausgangsstoffen bei Temperaturen zwischen 800 und 1300°C, anschließendem raschen Abkühlen (Abschrecken) der Schmelze in Wasser, wobei das Schmelzen üblicherweise in einem Keramiktiegel aus Feuerfestmaterial oder in einem Ofen mit geeigneter Auskleidung erfolgt.

Die Ausgangsstoffe werden in Form ihrer Oxide oder unter Schmelzbedingungen bildenden Verbindungen in die zu schmelzende Mischung eingebracht; beispielsweise werden Alkalimetalle häufig in Form ihrer Carbonate eingesetzt; sofern die Glasfritte zusätzlich Fluorid enthalten soll, wird dieses im allgemeinen in Form von Alkali- und/oder Erdalkalifluoriden oder von Na₃AlF₆ eingesetzt. Nach dem Schmelzen und Abschrecken der Glasfritte werden die Granulate, Schuppen oder anderen Fritte-Fragmente zerkleinert.

Die Beispiele zeigen, daß die Wahl der verschiedenen Bestandteile sowie deren Anteil durch die gewünschten chemisch-physikalischen Eigenschaften bedingt sind:
- Bei den erfindungsgemäßen Glasfrittenzusammensetzungen führt die Zugabe von Lanthantrioxid zu einer Verbesserung der chemischen Resistenz (Säure- und Laugenresistenz) und zu einer Herabsetzung der Schmelzbarkeit des Glases. Das Lanthanion La³⁺, ebenso wie Silicium Si⁴⁺ in einem Silikatglas, wirkt somit als Netzwerkbildner in dieser Art von Glas.
- Mit zunehmendem Al₂O₃-Gehalt sinkt der mittlere Wärmeausdehnungskoeffizient alpha (α_{20/300} °C·^{10-7K-1}) und der Schmelzbeginn Td (η = 10^{7,6} dPas; ASTM C338-73) steigt an.
- Mit steigendem Na₂O-Gehalt steigt alpha an und Td nimmt ab.
- Mit steigendem ZnO-Gehalt nehmen die Säurebeständigkeit und alpha zu und Td ab.
- Mit steigendem BaO-Gehalt nehmen alpha ab und Td zu.
- Mit steigendem TiO₂-Gehalt nimmt die Säurebeständigkeit zu.

Es wurde gefunden, daß mit nur wenigen Oxiden, nämlich B₂O₃, La₂O₃ sowie Al₂O₃ und/oder ZnO und im allgemeinen Na₂O, das auch durch CaO und/oder BaO ganz oder teilweise substituiert sein kann, Glasfritten erhältlich sind, deren Eigenschaften sehr unterschiedlich sein können: So lag bei beispielsgemäßen Fritten alpha beispielsweise im Bereich zwischen etwa 50 ·10⁻⁷K⁻¹ und etwa 100 ·10⁻⁷K⁻¹, der Schmelzbeginn Td im Bereich zwischen 470 und 670°C.

Mit den Glasfritten der erfindungsgemäßen Glasfrittenzusammensetzung und wegen der leicht und gezielt einstellbaren Eigenschaften lassen sich viele Einsatzgebiete erschließen, wozu bisher bleihaltige Silikatgläser erforderlich waren.

Mit der erfindungsgemäßen Frittenzusammensetzung, d.h. je nach Zusammensetzung der zugegebenen Oxide, ermöglichen die erhaltenen Fritten in Verbindung mit einem oder mehreren anorganischen Pigmenten die Herstellung von Emails für die Dekoration von Glas, Keramik oder Porzellan. Die Glasstrukuren der erfindungsgemäßen silikatfreien aber bor- und lanthanhaltigen Fritten sind schmelzbar bei Temperaturen, die sowohl im Biegeprozeß von Verbundglas als auch im Biegeprozeß von Härteglas gefordert werden; aus diesem Grund eignen sich die erfindungsgemäßen Frittenzusammensetzungen sowohl für die Herstellung von Windschutzscheiben, Heck- oder Seitenscheiben und Panoramadächern als auch von Platten und anderen Gegenstände aus Glas oder Keramik.

Das Anpastmedium für die erfindungsgemäßen Glasfritten und Pigmente und, falls erwünscht, weitere Zusätze werden im Hinblick auf die geplante Anwendungung ausgewählt. Es ist sehr wichtig, daß das Medium mit den Teilchen eine Suspension bildet und während des Brennvorgangs vollständig verbrennt.

Wie dargelegt, erschließen die erfindungsgemäßen Frittenzusammensetzungen sowie die entsprechenden Fritten Einsatzgebiete, welche bisher überwiegend bleihaltigen Silikatfritten vorbehalten waren. Dem Fachmann werden durch die neuen Fritten Stoffe zur Verfügung gestellt, welche es ihm gestatten, aus einem breiteren Spektrum von Frittenzusammensetzungen eine optimale Fritte für den jeweiligen Anwendungszweck auswählen zu können.

### Beispiele 1 bis 3

- Zum Einsatz in Emails für Heck- oder Seitenscheiben und Panoramadächern (Einscheibenglas) wurde die Fritte mit der Zusammensetzung gemäß Beispiel 1 hergestellt.
- Zum Einsatz in Emails für Windschschutzscheiben (Verbundglas) wurden die Fritten mit der Zusammensetzung gemäß Beispiel 2 und 3 hergestellt.

| Beispiel Nr. | 1 Mol-% | 2 Mol-% | 3 Mol-% |
|---|---|---|---|
| La₂O | 5,14 | 4,94 | 9,27 |
| B₂O₃ | 59,29 | 57,03 | 55,55 |
| Al₂O₃ | 15,81 | 15,21 | 9,26 |
| ZnO | 11,86 | 11,41 | 14,81 |
| Na₂O | 7,9 | 11,41 | 11,11 |

### Beispiele 4 bis 39

Die nachstehenden drei Serien von Zusammensetzungen wurden untersucht:
* Serie mit der Bezeichnung "6,5", ausgehend von einem Molverhältnis von 6,5 La₂O₃ zu 75 B₂O₃.
* Serie mit der Bezeichnung 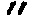 12,5 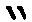 , ausgehend von einem Molverhältnis von 12,5 La 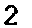 O 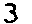 zu 75 B 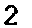 O 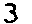 .
* Serie mit der Bezeichnung 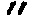 25 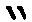 , ausgehend von einem Molverhältnis von 25 La 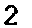 O 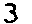 zu 75 B 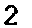 O 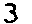 .

Die Zusammensetzung von insgesamt 39 Beispielen (einschließlich Beispiel 1 bis 3) ist in den Tabellen 1a (Serie 6,5); 2a (Serie 12,5) und 3a (Serie 25) wiedergegeben. Zu jeder Serie gehört eine weitere Tabelle - Nr. 1b, 2b und 3b -, in der die Beispiele in der Reihenfolge ihres linearen Wärmeausdehnungskoeffizienten (alpha) aufgeführt sind; die Tabellen 1b, 2b und 3b enthalten außerdem den Erweichungsbeginn (Td) der 39 Fritten.

**Tabelle 1a**

| "Serie 6,5" | | | | | | |
|---|---|---|---|---|---|---|
| Beispiel | 4 | 5 | 2 | 6 | 7 | 1 |
| La₂O₃ | 4,76 | 4,94 | 4,94 | 5,14 | 5,14 | 5,14 |
| B₂O₃ | 54,94 | 57,03 | 57,03 | 59,29 | 59,29 | 59,29 |
| Al₂O₃ | 14,65 | 15,21 | 15,21 | 15,81 | 15,81 | 15,81 |
| ZnO | 10,99 | 11,41 | 11,41 | 11,86 | 11,86 | 11,86 |
| Na₂O | 14,65 | 7,6 | 11,41 | 3,95 | | 7,9 |
| BaO | | 3,8 | | 3,95 | 7,9 | |
| (die Zusammensetzungen sind in Mol-% angegeben) | | | | | | |

**Tabelle 1b**

| "Serie 6,5 - alpha und Td" | | |
|---|---|---|
| Beispiel Nr. | alpha 10⁻⁷K⁻¹ | Td (°C) |
| 6 | 55,3 | 594 |
| 1 | 57,9 | 612 |
| 7 | 61,9 | 551 |
| 2 | 63,7 | 579 |
| 5 | 70,9 | 537 |
| 4 | 88,0 | 476 |

**Tabelle 2a**

| "Serie 12,5" | | | | | | | | | | |
|---|---|---|---|---|---|---|---|---|---|---|
| Beispiel | 8 | 9 | 10 | 11 | 12 | 13 | 3 | 14 | 15 | 16 |
| La₂O₃ | 8,77 | 8,77 | 8,93 | 8,93 | 8,93 | 9,09 | 9,27 | 9,43 | 9,43 | 9,61 |
| B₂O₃ | 52,63 | 52,63 | 53,57 | 53,57 | 53,57 | 54,54 | 55,55 | 56,6 | 56,6 | 57,69 |
| Al₂O₃ | 8,77 | 8,77 | 8,93 | 8,93 | 8,93 | 9,09 | 9,26 | 9,43 | 15,09 | 9,61 |
| ZnO | 14,03 | 14,03 | 14,28 | 14,28 | 14,28 | 14,54 | 14,81 | 15,09 | 11,32 | 15,38 |
| Na₂O | 8,77 | 15,79 | 10,71 | 7,14 | 14,28 | 12,73 | 11,11 | 9,43 | 7,55 | 7,69 |
| BaO | 7,02 | | 3,57 | 7,14 | | | | | | |

| Beispiel | 17 | 18 | 19 | 20 | 21 | 22 | 23 | 24 | 25 | 26 |
|---|---|---|---|---|---|---|---|---|---|---|
| La₂O₃ | 9,61 | 10 | 10 | 10 | 10 | 10,42 | 10,42 | 10,42 | 10,42 | 10,64 |
| B₂O₃ | 57,69 | 60 | 60 | 60 | 60 | 62,5 | 62,5 | 62,5 | 62,5 | 63,83 |
| Al₂O₃ | 9,61 | 10 | 10 | 10 | 10 | 10,42 | 10,42 | 10,42 | 6,25 | 17,02 |
| ZnO | 11,54 | 12 | 12 | 12 | 12 | 16,67 | 12,5 | 8,33 | 12,5 | |
| Na₂O | 11,54 | 4 | | 4 | 8 | | 4,17 | 8,33 | 8,33 | 8,51 |
| BaO | | 4 | 8 | | | | | | | |
| CaO | | | | 4 | | | | | | |

| Beispiel | 27 | 28 | 29 | 30 | 31 | 32 | 33 | 34 | 35 | |
|---|---|---|---|---|---|---|---|---|---|---|
| La₂O₃ | 10,87 | 10,87 | 10,87 | 10,87 | 11,11 | 11,36 | 11,36 | 11,9 | 12,5 | |
| B₂O₃ | 65,22 | 65,22 | 65,22 | 65,22 | 66,67 | 68,18 | 68,18 | 71,43 | 75,0 | |
| Al₂O₃ | 10,87 | 6,52 | 10,87 | 6,52 | 17,78 | 6,82 | 11,36 | 11,9 | 12,5 | |
| ZnO | 13,04 | 13,04 | 8,69 | 8,69 | | 9,09 | | | | |
| Na₂O | | 4,35 | 4,35 | 8,69 | 4,45 | 4,54 | 9,09 | 4,76 | | |

**Tabelle 2b**

| "Serie 12,5 - alpha und Td" | | |
|---|---|---|
| Beispiel Nr. | alpha 10⁻⁷K⁻¹ | Td (°C) |
| 22 | 52,0 | 659 |
| 27 | 53,6 | 665 |
| 35 | 53,8 | 677 |
| 18 | 59,6 | 596 |
| 19 | 60,0 | 620 |
| 32 | 61,8 | 614 |
| 20 | 61,9 | 619 |
| 14 | 62,0 | 586 |
| 31 | 62,1 | 612 |
| 26 | 62,2 | 620 |
| 28 | 62,5 | 609 |
| 23 | 62,4 | 607 |
| 29 | 63,2 | 603 |
| 34 | 63,5 | 635 |
| 15 | 68,0 | 600 |
| 16 | 68,6 | 622 |
| 21 | 68,8 | 595 |
| 25 | 68,9 | 586 |
| 33 | 69,0 | 589 |
| 24 | 71,9 | 597 |
| 13 | 73,2 | 577 |
| 10 | 75,1 | 554 |
| 11 | 75,7 | 543 |
| 30 | 76,8 | 559 |
| 3 | 78,9 | 522 |
| 8 | 80,2 | 520 |
| 17 | 80,9 | 537 |
| 12 | 84,3 | 516 |
| 9 | 87,6 | 488 |

**Tabelle 3a**

| "Serie 25" | | | | |
|---|---|---|---|---|
| Beispiel | 36 | 37 | 38 | 39 |
| La₂O₃ | 17,86 | 19,23 | 21,19 | 21,74 |
| B₂O₃ | 53,57 | 57,69 | 63,56 | 65,22 |
| Al₂O₃ | | | 2,54 | |
| ZnO | 21,43 | 23,08 | 12,71 | 13,04 |
| Na₂O | 7,14 | | | |

**Tabelle 3b**

| "Serie 25 - alpha und Td" | | |
|---|---|---|
| Beispiel Nr. | alpha 10⁻⁷K⁻¹ | Td (°C) |
| 37 | 60,0 | 666 |
| 39 | 63,0 | 674 |
| 38 | 67,6 | 662 |
| 36 | 74,2 | 574 |

Tabelle 4 zeigt den Einfluß von Na₂O als Zusatz zu der folgenden Zusammensetzung der Serie 6,5: 6,5 La₂O₃ - 75 B₂O₃ - 20 Al₂O₃ - 14 ZnO (Zusammensetzung in Mol). Lediglich der Mol-Gehalt von Na₂O ändert sich.

**Tabelle 4**

| Beispiel Nr. | Na₂O | α 10⁻⁶K⁻¹ | Td in °C |
|---|---|---|---|
| 7 | 10 | 6,193 | 551 |
| 5 | 15 | 7,086 | 532,4 |
| 4 | 20 | 8,798 | 476,3 |

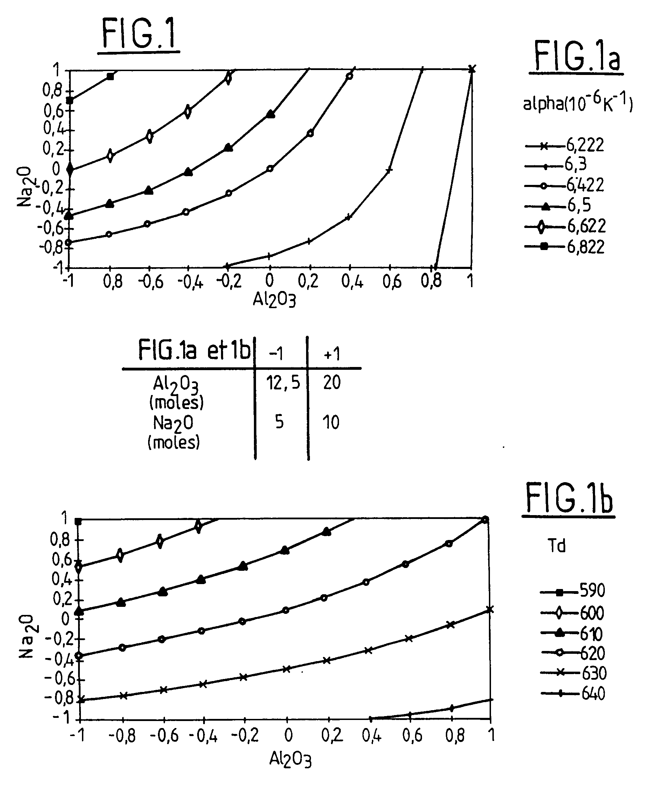

Der kombinierte Einfluß von Na₂O und Al₂O₃ als Zusatz zur folgenden Zusammensetzung der Serie 12,5: 12,5 La₂O₃ - 75 B₂O₃ wird in den Figuren 1a - alpha - und 1b - Td dargestellt. Gezeigt werden in Figur 1 Kurvenscharen für die angegebenen Werte für den mittleren Wäremausdehnungskoeffizienten alpha (Fig. 1) und die Temperatur Td (Schmelzbeginn) ( Fig. 1b), woraus sich mit Hilfe der im Figurenblatt angegebenen Grenzwerte für Al₂O₃ und Na₂O (Angaben in Mol) und der Zusammensetzung der Ausgangsmischung die molare Zusammensetzung von Glasfritten mit den gewünschten Werten für alpha und Td ermitteln läßt.

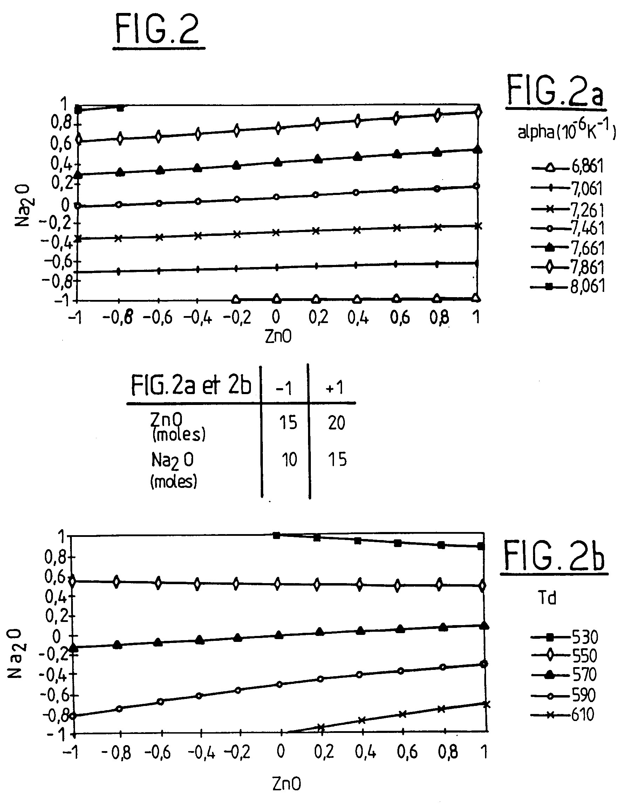

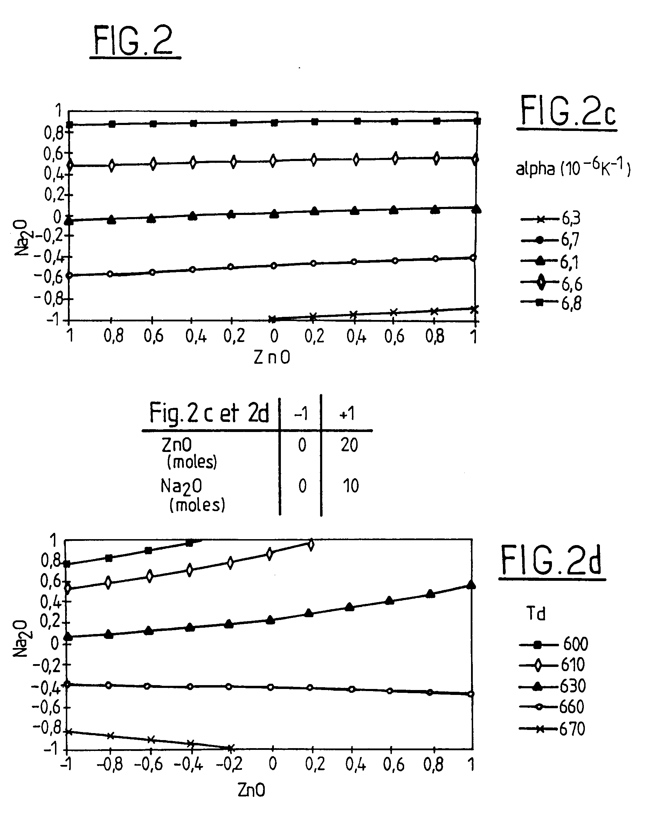

Der kombinierte Einfluß von Na₂O und ZnO als Zusatz zur folgenden Zusammensetzung der Serie 12,5: 12,5 La₂O₃ - 75 B₂O₃ - 12 Al₂O₃ (Zusammensetzung in Mol)wird in den Figuren 2a - alpha - und 2b - Td dargestellt und in den Figuren 2c - alpha - und 2d - Td fortgeführt. Aus den Kurvenscharen für alpha und Td sowie den angegebenen Grenzwerte für ZnO und Na₂O läßt sich in Verbindung mit der Zusammensetzung der Ausgangsmischung die molare Zusammensetzung von Glasfritten mit den gewünschten Werten für alpha und Td ermitteln.

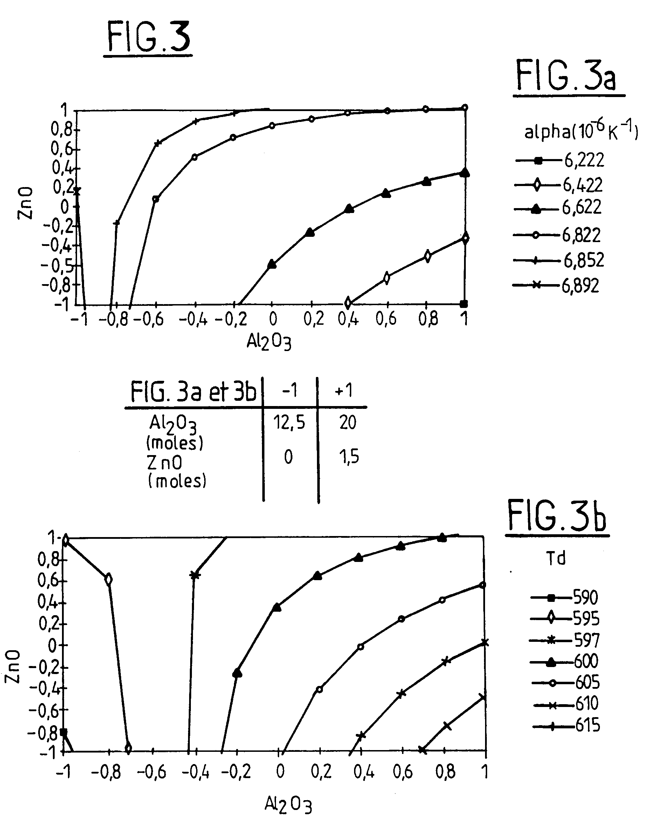

Der kombinierte Einfluß von ZnO und Al₂O₃ als Zusatz zur folgenden Zusammensetzung der Serie 12,5: 12,5 La₂O₃ - 75 B₂O₃ - 10 Na₂O (Zusammensetzung in Mol) wird in den Figuren 3a - alpha - und 3b - Td dargestellt. Aus den Kurvenscharen für alpha und Td sowie den angegebenen Grenzwerten für Al₂O₃ und ZnO läßt sich in Verbindung mit der Zusammensetzung der Ausgangsmischung die molare Zusammensetzung von Glasfritten mit den gewünschten Werten für alpha und Td ermitteln.

Tabelle 5 enthält die Zusammensetzungen (in Mol) und zeigt, wie sich der Austausch von Na₂O durch BaO in den Serien 6,5 und 12,5 auswirkt.

Serie 12,5: 12,5, La₂O₃ - 75 B₂O₃ - 12,5 Al₂O₃ - 15 ZnO - [10-x]Na₂O - xBaO.

Serie 6,5: 6,5 La₂O₃ - 75 B₂O₃ - 20 Al₂O₃ - 15 ZnO - [10-x]Na₂O - xBaO.

**Tabelle 5**

| Nr. | La₂O₃ | B₂O₃ | Al₂O₃ | ZnO | Na₂O | BaO | alpha 10⁻⁷K⁻¹ | Td (°C) |
|---|---|---|---|---|---|---|---|---|
| 21 | 12,5 | 75 | 12,5 | 15 | 10 | | 68,8 | 595 |
| 18 | 12,5 | 75 | 12,5 | 15 | 5 | 5 | 59,6 | 596 |
| 20 | 12,5 | 75 | 12,5 | 15 | | 10 | 61,9 | 619 |
| 7 | 6,5 | 75 | 20 | 15 | 10 | | 61,9 | 551 |
| 6 | 6,5 | 75 | 20 | 15 | 5 | 5 | 55,3 | 594 |
| 1 | 6,5 | 75 | 20 | 15 | | 10 | 57,9 | 612 |
| (Angabe der Oxidgehalte der Zusammensetzung in Mol) | | | | | | | | |

Nach Tabelle 5 führt der teilweise Austausch von Na₂O durch BaO zu einer deutlichen Senkung von alpha mit gleichzeitiger geringfügiger Erhöhung von Td. Die Auswirkung auf alpha ist in diesem Falle größer.

## Patentansprüche

1. Blei- und cadmiumfreie Glasfrittenzusammensetzung auf der Basis eines Boratglases,
dadurch gekennzeichnet,
daß sie als netzwerkbildende Oxide 30 bis 80 Mol-% Boroxid, 4 bis 22 Mol-% Lanthanoxid und im wesentlichen keine Kieselsäure enthält, das Molverhältnis von Boroxid (B 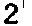 O 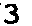 ) zu Lanthanoxid (La 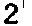 O 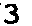 ) im Bereich von 3 zu 1 oder darüber liegt und daß sie ein oder mehrere Oxide aus der Reihe der Alkalimetalloxide, Erdalkalimetalloxide, Aluminiumoxid und Zinkoxid in einer Gesamtmenge von 4 bis 65 Mol-% enthält.

2. Glasfrittenzusammensetzung nach Anspruch 1,
dadurch gekennzeichnet,
daß sie 4 bis 22 Mol-% La 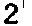 O 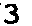 , 45 bis 75 Mol-% B 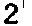 O 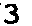 , 0 bis 25 Mol-% Al 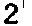 O 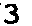 , 0 bis 30 Mol-% ZnO, 0 bis 25 Mol-% Na 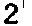 O, 0 bis 10 Mol-% K 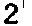 O und 0 bis 10 Mol-% CaO und/oder BaO enthält, die Gesamtmenge an Al 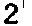 O 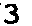 , ZnO, Na 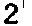 O, K 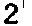 O, CaO und BaO 10 bis 50 Mol-% ausmacht und zusätzlich insgesamt bis zu 10 Mol-% andere als die zuvor genannten Metalloxide anwesend sein können.

3. Glasfrittenzusammensetzung nach Anspruch 3,
dadurch gekennzeichnet,
daß sie im wesentlichen aus
4 bis 22 Mol-% La₂O₃,
50 bis 70 Mol-% B₂O₃,
0 bis 20 Mol-% Al₂O₃,
0 bis 25 Mol-% ZnO,
0 bis 20 Mol-% Na₂O,
0 bis 10 Mol-% K₂O und
0 bis 10 Mol-% CaO und/oder BaO
besteht, wobei die Summe aus Al₂O₃ und ZnO 10 bis 30 Mol-% und die Summe aus den genannten Alkali- und Erdalkalimetalloxiden 4 bis 20 Mol-% ausmacht.

4. Glasfrittenzusammensetzung nach einem der Ansprüche 1 bis 3,
dadurch gekennzeichnet,
daß sie 4,76 bis 21,74 Mol-% La 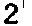 O 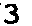 enthält.

5. Glasfritten, gekennzeichnet durch eine Zusammensetzung gemäß einem der Ansprüche 1 bis 4.

6. Verfahren zur Herstellung einer Glasfritte der Zusammensetzung gemäß einem der Ansprüche 1 bis 4 durch Schmelzen eines Glasversatzes bei 800 bis 1300 °C, anschließendes Abschrecken der Schmelze und Zerkleinern des beim Abschrecken erhaltenen Granulats,
dadurch gekennzeichnet,
daß der Glasversatz im wesentlichen aus Oxiden und/oder Oxide bildenden Verbindungen in einer molaren Zusammensetzung entsprechend der Glasfrittenzusammensetzung besteht.

7. Verwendung blei- und cadmiumfreier Glasfritten mit einer Zusammensetzung gemäß einem der Ansprüche 1 bis 4 zur Herstellung von Emails für die Dekoration von Glas, Porzellan und Keramik.

## Claims

1. Lead-free and cadmium-free glass frit composition based on a borate glass,
characterised in that
it contains as network-forming oxides 30 to 80 mol-% of boron oxide, 4 to 22 mol-% of lanthanum oxide and substantially no silica, the molar ratio of boron oxide (B₂O₃) to lanthanum oxide (La₂O₃) is within the range of 3 to 1 or over, and that it contains one or more oxides from among the alkali metal oxides, alkaline earth metal oxides, aluminium oxide and zinc oxide in a total quantity of 4 to 65 mol-%.

2. Glass frit composition according to claim 1,
characterised in that
it contains 4 to 22 mol-% of La₂O₃, 45 to 75 mol-% of B₂O₃, 0 to 25 mol-% of Al₂O₃, 0 to 30 mol-% of ZnO, 0 to 25 mol-% of Na₂O, 0 to 10 mol-% of K₂O and 0 to 10 mol-% of CaO and/or BaO, the total quantity of Al₂O₃, ZnO, Na₂O, K₂O, CaO and BaO amounts to 10 to 50 mol-% and in addition altogether up to 10 mol-% of metal oxides different from those mentioned above may be present.

3. Glass frit composition according to claim 2,
characterised in that
it consists substantially of
4 to 22 mol-% of La₂O₃,
50 to 70 mol-% of B₂O₃,
0 to 20 mol-% of Al₂O₃,
0 to 25 mol-% of ZnO,
0 to 20 mol-% of Na₂O,
0 to 10 mol-% of K₂O and
0 to 10 mol-% of CaO and/or BaO,
the sum of Al₂O₃ and ZnO amounting to 10 to 30 mol-% and the sum of the above-mentioned alkali metal oxides and alkaline earth metal oxides amounting to 4 to 20 mol-%.

4. Glass frit composition according to one of claims 1 to 3,
characterised in that
it contains 4.76 to 21.74 mol-% of La₂O₃.

5. Glass frits, characterised by a composition according to one of claims 1 to 4.

6. A process for the production of a glass frit having the composition according to one of claims 1 to 4 by the melting of a glass batch at 800 to 1300°C, subsequent rapid cooling of the melt and comminution of the granular material obtained during rapid cooling,
characterised in that
the glass batch consists substantially of oxides and/or oxide-forming compounds in a molar composition corresponding to the glass frit composition.

7. The use of lead-free and cadmium-free glass frits having a composition according to one of claims 1 to 4, for the production of enamels for decorating glass, porcelain and ceramic.

## Revendications

1. Composition de frittes de verre exempte de plomb et de cadmium à base d'un verre boraté,
caractérisée en ce qu'
elle contient comme oxydes formant un réseau 30 à 80 % molaires d'oxyde de bore, 4 à 22 % molaires d'oxyde de lanthane et essentiellement pas de silice le rapport molaire de l'oxyde de bore (B₂O₃) à l'oxyde de lanthane (La₂O₃) est dans l'intervalle de 3 à 1 ou plus et qu'elle contient un ou plusieurs oxydes de la série des oxydes de métaux alcalins, des oxydes de métaux alcalino-terreux, de l'oxyde d'aluminium et de l'oxyde de zinc en une quantité totale de 4 à 65 % molaires.

2. Composition de frittes de verre selon la revendication 1,
caractérisée en ce qu'
elle contient 4 à 22 % molaires de La₂O₃, 45 à 75 % molaires de B₂O₃, 0 à 25 % molaires de Al₂O₃, 0 à 30 % molaires de ZnO, 0 à 25 % molaires de Na₂O, 0 à 10 % molaires de K₂O et 0 à 10 % molaires de CaO et/ou BaO, la quantité totale de Al₂O₃, ZnO, Na₂O, K₂O, CaO et BaO représente 10 à 50 % molaires et en plus, globalement jusqu'à 10 % molaires d'autres oxydes métalliques que ceux déjà cités peuvent être présents.

3. Composition de frittes de verre selon la revendication 2,
caractérisée en ce qu'
elle est constituée essentiellement de :
4 à 22 % molaires de La₂O₃,
50 à 70 % molaires de B₂O₃,
0 à 20 % molaires de Al₂O₃,
0 à 25 % molaires de ZnO,
0 à 20 % molaires de Na₂O,
0 à 10 % molaires de K₂O et
0 à 10 % molaires de CaO et/ou BaO,
où la somme de Al₂O₃ et ZnO₂ représente 10 à 30 % molaires et la somme des oxydes de métaux alcalins et alcalino-terreux représente 4 à 20 % molaires.

4. Composition de frittes de verre selon l'une des revendications 1 à 3,
caractérisée en ce qu'
elle contient 4,76 à 21,74 % molaires de La₂O₃.

5. Frittes de verre,
caractérisées par
une composition selon l'une des revendication 1 à 4.

6. Procédé de préparation d'une fritte de verre de composition selon l'une des revendications 1 à 4 par fusion d'une composition de verre entre 800 et 1300 %_{,} puis trempe de la masse fondue et broyage du granulé obtenu lors de la trempe,
caractérisé en ce que
la composition de verre est constituée essentiellement d'oxydes et/ou de composés formant des oxydes en une composition molaire correspondant à la composition de frittes de verre.

7. Utilisation de frittes de verre exemptes de plomb et de cadmium ayant une composition selon l'une des revendications 1 à 4 pour produire des émaux pour la décoration du verre, de la porcelaine et de la céramique.
